# EUROPEAN PATENT APPLICATION

(11) **EP 2 138 477 A2**
(43) Date of publication of application: **30.12.2009**
(21) Application number: 09251226.8
(22) Date of filing: 30.04.2009
(51) Int. Cl.: C04B 41/89, F01D 5/28

(54) **Protective coatings for silicon based substrates with improved adhesion**

(30) Priority: 25.06.2008 US 145555
(71) Applicant: United Technologies Corporation, Hartford, CT 06101 (US)
(72) Inventor: Tulyani, Sonia, Manchester, CT 06042 (US); Bhatia, Tania, Middletown, CT 06457 (US)
(74) Representative: Hall, Matthew Benjamin

(57) **Abstract**

An environmental coating system for silicon based substrates (10) wherein a porous intermediate barrier layer (60) having an elastic modulus of about 30 to 150GPa is provided between a silicon metal containing bondcoat (30) and a ceramic top environmental barrier layer (40). A compliant layer (20) is provided between the substrate and the bondcoat (30).

## Description

The present invention relates to environmental barrier coatings (EBC) on silicon based substrates. In particular, the invention relates to the addition of a compliant layer to improve coating adhesion.

Silicon based structural ceramics such as monolithic silicon carbide, silicon nitride, and ceramic matrix composites are strong candidates for application as components in gas turbine engines because of their superior mechanical and physical properties at high temperatures as well as their low densities. However, high temperature aqueous environments cause the formation of volatile oxides and hydroxides that result in material loss during engine operation. In order to prolong the life of the components, it is essential to use protective coatings known as environmental barrier coatings (EBC). Environmental barrier coatings are typically multilayer coatings consisting of a bondcoat which may be a dense layer of silicon metal and an environmental barrier layer on the bondcoat comprising, for example, an alkaline earth aluminosilicate based on barium and/or strontium or yttrium silicate or hafnium oxide. Intermediate layers between the bondcoat and the environmental barrier layer and between the bondcoat and the substrate are another embodiment of prior art. The intermediate layers are sometimes included to offer mechanical compliance and/or chemical compatibility to the coating system. The intermediate layers comprise, for example, a two phase mixture of the barrier layer material and an oxide such as mullite. Since ceramics are inherently brittle, a mismatch in thermal expansion coefficient and elastic modulus of adjacent layers can result in thermally induced interfacial stress in monolithic ceramic multilayer systems undergoing thermal cycling such as that experienced in gas turbine engines. The stored elastic energy in these systems can be sufficient to initiate fracture through the layer thickness and along interfaces resulting in spalling of the EBC. High thermal stresses may also activate small critical flaws resulting in failure well below the expected substrate strength.

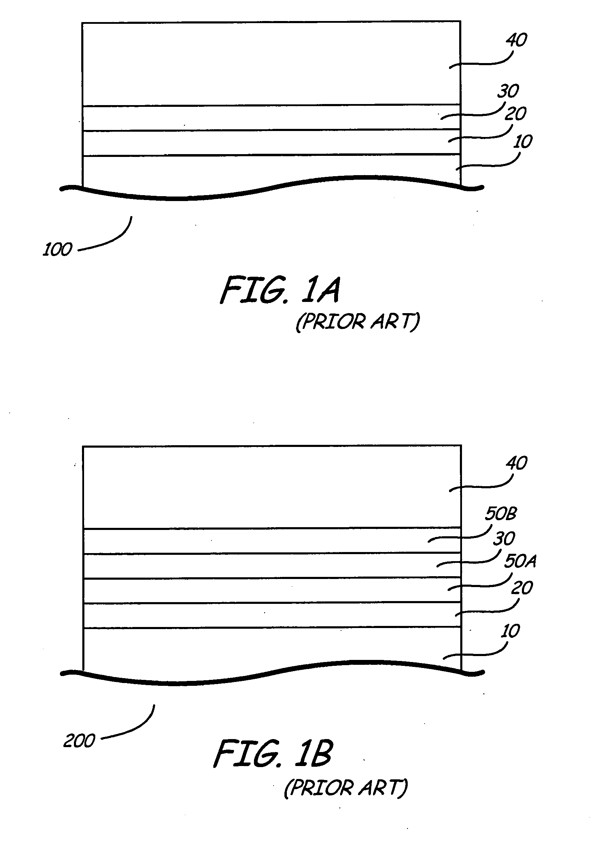

Prior art solution to fracture at bondcoat or intermediate layer interfaces is shown in FIG. 1A, wherein composite article 100 has compliant layer 20 on substrate 10 under bondcoat 30. Environmental barrier layer 40 is on bondcoat 30. Compliant layer 20 has an elastic modulus of between about 30GPa and 150GPa and reduces the stored elastic strain energy at the interface resulting from thermal excursions.

Another embodiment of prior art is shown in FIG. 1B, wherein composite article 200 has intermediate barrier layers 50A and 50B existing between bondcoat layer 30 and compliant layer 20 and bondcoat layer 30 and environmental barrier layer 40.

The prior art solution mitigated the adhesion difficulties at the substrate/EBC interface. However, the bondcoat/environmental barrier layer and bondcoat/intermediate layer interfaces have also been found to exhibit early fracture due to stored elastic strain energy resulting from thermal expansion and elastic modulus mismatch. A thermal barrier coating system with overall coating adhesion improvement is needed.

The present invention relates to an article comprising a silicon based substrate having an environmental barrier coating (EBC) on the substrate with improved adhesion. The EBC comprises a bondcoat comprising, for example, a dense layer of silicon metal. The EBC further comprises a top environmental barrier layer comprising, for example, an alkaline earth alumino silicate. The EBC further comprises a compliant layer with a preferred elastic modulus of about 30GPa to 150GPa between the substrate and the bondcoat. The compliant layer decreases the tensile stresses in adjacent layers, reduces the stored elastic strain energy in the coating system and buffers the stress concentration in the substrate resulting in improved coating adhesion. The EBC further comprises a porous intermediate layer between the bondcoat and the top environmental barrier layer with an elastic modulus of about 30GPa to 150GPa. The porous intermediate layer also decreases the tensile stresses in adjacent layers, reduces the stored elastic strain energy in the coating system and buffers the stress concentration in the substrate resulting in improved coating adhesion. It is preferred that the EBC layers are formed by slurry based processes such as dip coating.

Another embodiment of the invention is a method of making the article wherein the layers are deposited by thermal spraying, chemical vapor deposition, physical vapor deposition, electrophoretic deposition, electrostatic deposition, preceramic polymer pyrolysis, sol-gel, slurry coating, dipping, air brushing, sputtering, slurry painting or any combinations thereof. A preferred method of depositing the layers is by slurry based processes, preferably dip coating.

Certain preferred embodiments of the present invention will now be described in greater detail by way of example only and with reference to the accompanying drawings, in which:
FIG. 1A and 1B are schematic illustrations of composite articles in accordance with the prior art;
FIG. 2 is a schematic illustration of a composite article in accordance with one embodiment of the present invention;
FIG. 3 is a schematic illustration of a composite article in accordance with another embodiment of the present invention;
FIG. 4 is a SEM showing EBC delamination when a porous intermediate layer between bondcoat and environmental barrier layer is absent;
FIG. 5 is a SEM showing excellent EBC adhesion when a porous compliant layer and a porous intermediate layer are employed; and
FIG. 6 is a high magnification SEM showing the porosity in the porous intermediate layer.

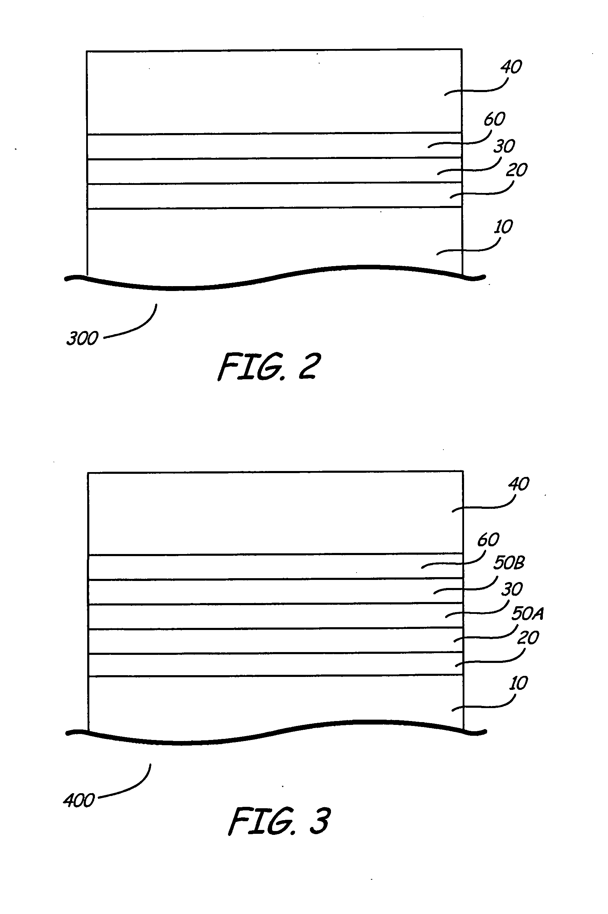

With reference to FIG. 2, composite article 300 of the present invention is illustrated and comprises silicon based substrate 10, bondcoat 30, and compliant layer 20 between substrate 10 and bondcoat 30. The invention further comprises environmental barrier layer 40 and inventive porous intermediate barrier layer 60 between bondcoat 30 and environmental barrier layer 40. Another embodiment of the present invention is illustrated in FIG. 3 where composite article 400 comprises silicon based substrate 10, compliant layer 20 between substrate 10 and intermediate barrier layer 50A. Intermediate barrier layer 50A is between bondcoat 30 and compliant layer 20. Intermediate barrier layer 50B is on bondcoat 30 and is between bondcoat 30 and porous intermediate barrier layer 60. Environmental barrier layer 40 is on porous intermediate barrier layer 60 which is between intermediate barrier layer 50B and environmental barrier layer 40.

Bondcoat 30 materials are mostly oxygen gettering materials such as silicon and refractory metal silicides and combinations thereof. While a silicon containing oxygen gettering layer is a preferred embodiment of this invention, alternately bondcoat 30 could also be high temperature metallic alloys that are alumina and chromia formers known in the art.

In accordance with the present invention, compliant layer 20 is selected from the group comprising alkaline earth alumino silicates, yttrium monosilicate, yttrium disilicate, rare earth mono and disilicates, hafnium silicate, zirconium silicate; oxides of hafnium, zirconium, yttrium, rare earth metals, niobium, titanium, tantalum, silicon, aluminum; silicon nitride; silicon carbides; silicon oxynitrides; silicon oxycarbides; silicon oxycarbonitrides; silicon refractory metal oxides; alumina forming refractory metal alloys; chromia forming refractory metal alloys, and mixtures thereof. It is preferred that the composition of compliant layer 20 be selected from the group comprising yttrium oxide, hafnium oxide, rare earth metal oxides, yttrium monosilicate, yttrium disilicate, rare earth mono and disilicates, hafnium silicate, and mixtures thereof. A preferred material is yttrium disilicate. The preferred elastic modulus of the compliant layer 20 is about 30GPa to 150GPa. The porosity of compliant layer 20 must be controlled in order to ensure the desired behavior characteristics noted above. It is preferred that compliant layer 20 have a porosity of about 2 to 50 percent and more preferably about 5 to 30 percent. Porosity refers to the fraction of voids in the compliant layer 20. The thickness of the compliant layer 20 is preferred to be between about 20 and 250 microns and more preferably between about 40 and 125 microns. The ratio of thickness of compliant layer 20 to bondcoat layer 30 is preferred to be between about 0.1:1 and 10:1. Compliant layer 20 may comprise a plurality of layers having the composition of the material set forth above. Compliant layer 20 and bondcoat layer 30 may be repeated one or more times in the environmental barrier coating system if desired.

Silicon based substrate 10 includes materials selected from the group comprising monolithic silicon nitride, monolithic silicon carbide, silicon nitride containing composites, silicon carbide containing composites, silicon oxynitrides, silicon oxycarbides, silicon carbonitrides, molybdenum alloys containing silicon, and niobium alloys containing silicon.

The article of the present invention further includes environmental barrier layer 40 applied to the bondcoat system. Environmental barrier layer 40 provides protection against high velocity steam at high temperatures and high pressure. Environmental barrier layers 40 may comprise mullite, alkaline earth aluminosilicates including barium strontium aluminosilicate (BSAS) and strontium aluminosilicate (SAS), yttrium silicates, rare earth silicates, hafnium or zirconium silicate, oxides of hafnium, zirconium, titanium, silicon, yttrium, rare earth metals, tantalum, niobium, aluminum, and mixtures thereof. A preferred material is hafnium oxide.

In accordance with the present invention, porous intermediate barrier layer 60 is selected from the group comprising a mixture of environmental barrier layer 40 material with an additional oxide such as mullite, rare earth aluminosilicates, yttrium monosilicate, yttrium disilicate, rare earth mono and disilicates, hafnium silicate, zirconium silicate; oxides of hafnium, zirconium, yttrium, rare earth metals, niobium, titanium, tantalum, silicon, aluminum; silicon nitride; silicon carbides; silicon oxynitrides; silicon oxycarbides; silicon oxycarbonitrides; silicon refractory metal oxides; alumina forming refractory metal alloys; chromia forming refractory metal alloys; and mixtures thereof. It is preferred that the composition of porous intermediate barrier layer 60 be selected from the group comprising yttrium oxide, hafnium oxide, rare earth metal oxides, yttrium monosilicate, yttrium disilocate, rare earth mono and disilicates, hafnium silicate and mixtures thereof. A preferred embodiment is yttrium disilicate.

The porosity of porous intermediate barrier layer 60 must be controlled in order to ensure the desired behavior characteristics noted earlier for compliant layer 20. It is preferred that porous intermediate barrier layer 60 have a porosity of about 2 to 50 percent and more preferably about 5 to 30 percent. The thickness of porous intermediate barrier layer 60 is preferred to be between about 20 and 250 microns and more preferably between about 40 and 125 microns. The ratio of thickness of porous intermediate barrier layer 60 and bondcoat 30 is preferred to be between about 0.1:1 and 10:1. Porous intermediate barrier layer 60 may comprise a plurality of layers having the composition of the materials set forth above. Porous intermediate barrier layer 60 and bondcoat 30 may be repeated one or more times in the environmental barrier coating system if desired.

In accordance with the present invention, intermediate barrier layers 50A, 50B may be placed between bondcoat 30 and compliant layer 20 and between bondcoat 30 and porous intermediate barrier layer 60. Intermediate layers 50A, 50B are selected from the group comprising a mixture of the environmental barrier coat layer material with an additional oxide such as mullite, alkaline and earth aluminosilicates, yttrium monosilicate, yttrium disilicate, rare earth mono and disilicates, hafnium silicate, zirconium silicate, oxides of hafnium, zirconium, yttrium, rare earth metals, niobium, titanium, tantalum, silicon, alumina; silicon nitride; silicon carbide; silicon oxynitrides; silicon oxycarbides; silicon oxycarbonitrides; silicon refractory metal oxides; alumina forming refractory metal alloys; chromia forming refractory metal alloys; and mixtures thereof.

The layers described above may be applied by any processing methods known in prior art which comprise, thermal spraying, chemical vapor deposition, physical vapor deposition, electrophoretic deposition, electrostatic deposition, preceramic polymer pyrolysis, sol-gel, slurry coating, dipping, air brushing, sputtering, slurry painting or any combination thereof. Slurry based processing methods of coating application such as dipping and painting are preferred for economic and production efficiency criteria.

In order to obtain the desired porosity in compliant layer 20 and in porous intermediate barrier layer 60, sacrificial pore formers can be used to introduce porosity into the layers. Sacrificial pore formers are well known in the art and include material such as polyesters, polystyrene, etc.

By employing the bondcoat systems of the present invention wherein a compliant layer 20 with an elastic modulus between about 30GPa and 150GPa and a porous intermediate barrier layer 60 with a modulus of between about 30GPa and 150GPa are used in conjunction with a bondcoat 30, crack initiation and/or propagation from coating to substrate 10 or vice versa is mitigated. This results in the strength retention of coated substrates close to that of baseline substrates, which is critical for structural applications.

### EXAMPLE

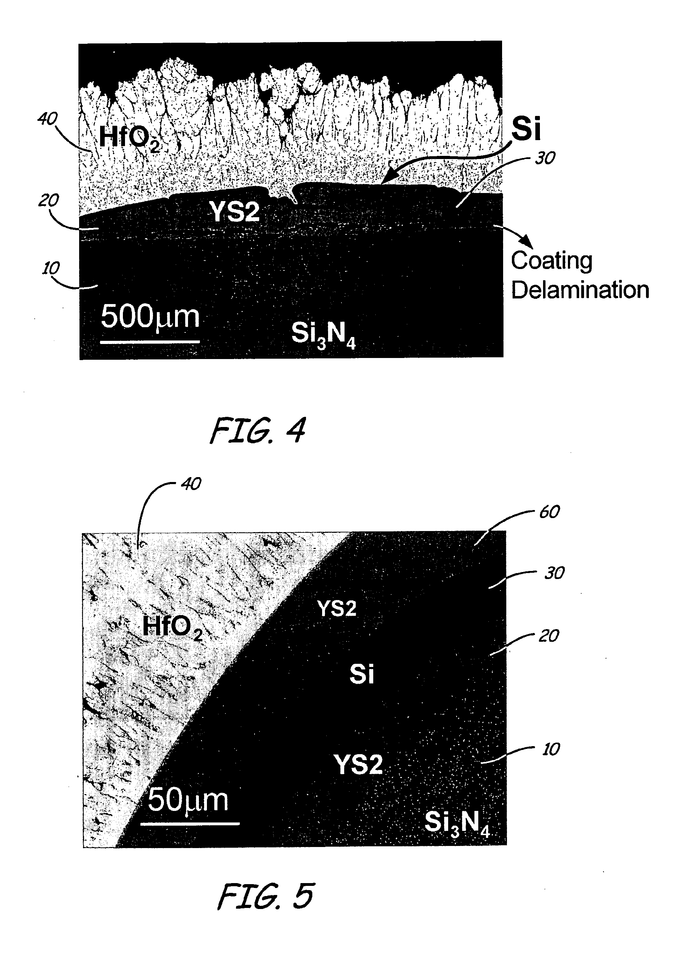

The effectiveness of a compliant layer 20 and a porous intermediate barrier layer 60 in enhancing EBC adhesion is illustrated in FIGS. 4-6. FIG. 4 shows a scanning electron micrograph (SEM) of a cross-section of a silicon nitride substrate with a porous yttrium disilicate (YS2) compliant layer 20 between the substrate 10 and a silicon bondcoat 30 and a hafnium oxide environmental barrier layer 40 on the bondcoat 30. The coating has delamininated in the compliant layer 20 due to elastic stresses generated in the compliant layer 20 due to thermal excursions.

FIG. 5 shows a higher magnification SEM of a cross-section of an environmental barrier coat (EBC) 40 on a silicon nitride substrate 10 consisting of a porous yttrium disilicate (YS2) compliant layer 20 between a silicon bondcoat 30 and the substrate 10 and an yttrium disilicate porous intermediate barrier layer 60 between the bondcoat 30 and a hafnium oxide environmental barrier layer 40. The coating is intact after thermal cycling.

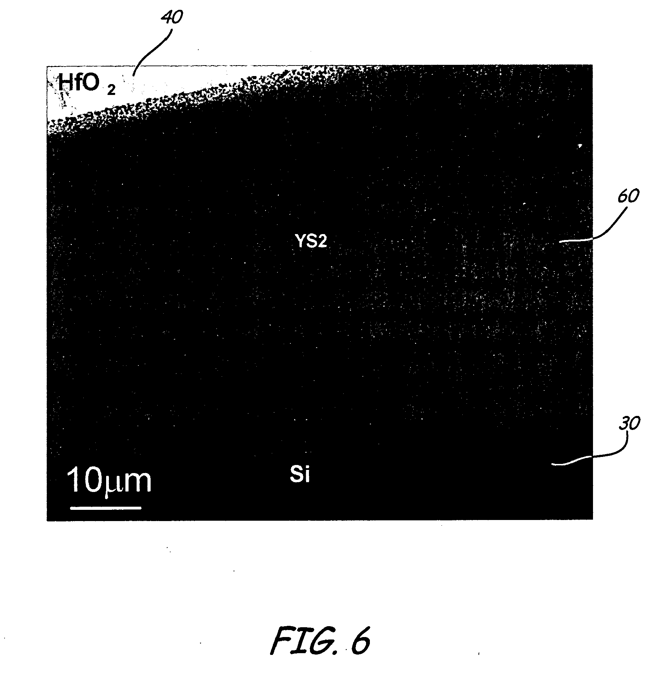

FIG. 6 is an even higher magnification SEM of that shown in FIG. 5 showing the porosity in the yttrium disilcate porous intermediate barrier layer 60.

Although the present invention has been described with reference to preferred embodiments, workers skilled in the art will recognize that changes may be made in form and detail without departing from the scope of the invention.

## Claims

1. An article comprising:
a silicon based substrate (10);
a bondcoat (30);
a compliant layer (30) between the silicon based substrate and the bondcoat;
a top barrier layer (40); and
a porous intermediate barrier layer (60) between the bondcoat and the top barrier layer.

2. An article according to claim 1, wherein the compliant layer (20) comprises at least one of: an alkaline earth alumino silicate, a yttrium monosilicate, a yttrium disilicate, a rare earth monosilicate, a rare earth disilicate, a hafnium silicate, a zirconium silicate, a hafnium oxide, a zirconium oxide, a yttrium oxide, a rare earth metal oxide, a niobium oxide, a titanium oxide, a tantalum oxide, a silicon oxide, an aluminum oxide, a silicon nitride, a silicon carbide, a silicon oxynitride, a silicon oxycarbide, a silicon oxycarbonitride, a silicon refractory metal oxide, an alumina forming refractory metal alloy, a chromia forming refractory metal alloy, and mixtures thereof.

3. An article according to claim 2, wherein the compliant layer (20), and/or the porous intermediate barrier layer (60), has a porosity of about 2 percent to about 50 percent.

4. An article according to claim 1 or 2, wherein the compliant layer (20), and/or the porous intermediate barrier layer (60), has a thickness of about 20 microns to about 250 microns.

5. An article according to any preceding claim, wherein at least one sacrificial pore former is used to control the porosity and modulus of the compliant layer (20), and/or the porous intermediate barrier layer (60).

6. An article according to any preceding claim, wherein the elastic modulus of the compliant layer (20), and/or the porous intermediate barrier layer (60), is between about 30 and 150GPa.

7. An article according to any preceding claim, wherein the bondcoat (30) comprises at least one of a silicon metal, a silicon metal alloy, an intermetallic silicide, a chromia forming metallic alloy, an alumina forming metallic alloy, and mixtures thereof.

8. An article according to any preceding claim, wherein the porous intermediate barrier layer (60) comprises at least one of: an alkaline earth alumino silicate, a yttrium monosilicate, a yttrium disilicate, a rare earth monosilicate, a rare earth disilicate, a hafnium silicate, a zirconium silicate, a hafnium oxide, a zirconium oxide, a yttrium oxide, a rare earth metal oxide, a niobium oxide, a titanium oxide, a tantalum oxide, a silicon oxide, an aluminum oxide, a silicon nitride, a silicon carbide, a silicon oxynitride, a silicon oxycarbide, a silicon oxycarbonitride, a silicon refractory metal oxide, an alumina forming refractory metal alloy, a chromia forming refractory metal alloy, and mixtures thereof.

9. An article according to claim 8, wherein the porous intermediate barrier layer (60) comprises yttrium disilicate.

10. An article according to any preceding claim, wherein
- the top environmental barrier layer (40) comprises at least one layer comprising at least one of: mullite, an alkaline earth aluminosilicate, barium strontium aluminosilicate (BSAS), strontium aluminosilicate (SAS), a yttrium silicate, a rare earth silicate, a hafnium silicate, a zirconium silicate, a hafnium oxide, a zirconium oxide, a titanium oxide, a silicon oxide, a yttrium oxide, a rare earth metal oxide, a tantalum oxide, a niobium oxide, an aluminum oxide, and mixtures thereof,
and/or
- the silicon based substrate (10) comprises at least one, of: a monolithic silicon nitride, a monolithic silicon carbide, a silicon nitride containing composite, a silicon carbide containing composite, a silicon oxynitride, a silicon carbonitride, a silicon oxycarbide, a molybdenum alloy containing silicon, and a niobium alloy containing silicon.

11. An article according to any preceding claim, wherein the porous intermediate barrier layer (60) and top barrier layer (40) are on the bondcoat (30).

12. An article according to any preceding claim, wherein:
the compliant layer (20) and bondcoat (30) are repeated at least once; and/or
the porous intermediate barrier layer (60) and the top barrier layer (40) are repeated at least once.

13. A method of making the article according to any preceding claim, wherein at least one of the top barrier layer (40), porous intermediate barrier layer (60), bondcoat (30), and compliant layer (20), is deposited using at least one of thermal spraying, chemical vapor deposition, physical vapor deposition, electrophoretic deposition, electrostatic deposition, preceramic polymer pyrolysis, sol-gel, slurry coating, dipping, air brushing, sputtering, slurry painting or any combination thereof.

14. The method of claim 13, wherein the top barrier layer (40), porous intermediate barrier layer (60), bondcoat (30), and compliant layer (20) are formed by slurry based processes.

15. The method of claim 13, wherein the top barrier layer (40), porous intermediate barrier layer (60), bondcoat (30), and compliant layer (20) are formed by dip coating.
